# EUROPÄISCHE PATENTSCHRIFT

(11) **EP 1 705 044 B1**
(45) Veröffentlichungstag und Bekanntmachung des Hinweises auf die Patenterteilung: **07.05.2014**
(21) Anmeldenummer: 06005916.9
(22) Anmeldetag: 23.03.2006
(51) Int. Cl.: B60J 7/00

(54) **Vorrichtung zum Festlegen eines verschiebbaren Beschattungssystems**
Device to fix a slidable shade system
Dispositif pour fixer un pare-soleil coulissant

(30) Priorität: 24.03.2005 DE 102005013644
(43) Veröffentlichungstag der Anmeldung: 27.09.2006
(73) Patentinhaber: GM Global Technology Operations LLC, Detroit, MI 48265-3000 (US)
(72) Erfinder: Thums, Holger, 60437 Frankfurt (DE)
(74) Vertreter: Strauss, Peter

(56) Entgegenhaltungen:
- EP-A- 1 201 473
- DE-A1- 2 808 452
- DE-A1- 3 338 372
- DE-B- 1 130 716
- JP-A- 1 273 722

## Beschreibung

Die Erfindung betrifft eine Vorrichtung zum Festlegen eines verschiebbaren Beschattungssystems, insbesondere zur Verwendung in einem Kraftfahrzeug, wobei das Beschattungssystem mindestens eine Bremseinrichtung zum Festlegen des Beschattungssystems aufweist, und die Bremseinrichtung mittels eines Seilzugs, der durch ein Stellglied betätigbar ist, entgegen der Kraft einer Feder lösbar ist.

Verschiebbare Beschattungssysteme finden, insbesondere bei Kraftfahrzeugen, in unterschiedlichster Art und Weise Verwendung.

So ist aus der EP 1 449 692 A1 ein verschiebbares Beschattungssystem für Schiebedächer bekannt geworden. Dieses besteht aus einem Himmelteil, das am Innenhimmel oder Dachöffnungssystem des Fahrzeugdachs verschiebbar angebracht ist. Das Himmelteil kann dabei starr ausgebildet sein.

Aus der EP 1 201 473 A2 ist ferner ein Beschattungssystem bekannt geworden, dass als Fensterrollo, insbesondere zur Verwendung in einem Fahrzeug, gestaltet ist. Das Fensterrollo besteht im wesentlichen aus einer Wickelwelle, einer darauf auf- und abwickelbar angeordneten Rollobahn, einem Zugstab, an dem das freie Ende der Rollobahn befestigt ist und aus einer aus zwei die Rollobahn an den Längsrändern flankierenden Hohlprofilleisten gebildeten Führungseinrichtung für den Zugstab. In den abgewandten Enden des Zugstabes sind Bremseinrichtungen gelagert, wobei die jeweilige Bremseinrichtung unter Wirkung einer Druckfeder gegen die Führungseinrichtung gedrückt wird. Die beiden Bremseinrichtungen sind mittels eines gemeinsamen Seilzugs verbunden. Mit dem Zugstab ist ein Griff verbunden, zum Verschieben des Zugstabs und damit dem Auf- und Abwickeln der Rollobahn. Im Bereich der Öffnung des Griffs ist ein Schwenkhebel angeordnet, der beim Schwenken gegen das Seil bewegt wird und damit die Bremseinrichtungen in diejenige Stellung überführt, in der sie das Beschattungssystem nicht festlegen. Es kann damit, bei dauerhafter Betätigung des Hebels, der am Griff ergriffene Zugstab verschoben werden. Wird der Hebel nicht betätigt, werden, unter der Einwirkung der Federn, die beiden Bremseinrichtungen wieder in die das Beschattungssystem festlegende Position überführt.

Nachteilig ist bei der beschriebenen Vorrichtung, dass der das Stellglied bildende Hebel auf das eine, den beiden Bremseinrichtungen zugeordnete Seil einwirkt. Die Seile werden somit nicht unabhängig voneinander betätigt. Des Weiteren muss das Stellglied aufwendig bezüglich der Bahn des zwischen den beiden Bremseinrichtungen gespannten Seils justiert werden. Die auf das Stellglied wirkenden Kraftangriffspunkte und auf das Stellglied wirkende Rückstellkräfte des Seils sind ungünstig.

Eine weitere Vorrichtung zum Festlegen eines verschiebbaren Beschattungssystems ist aus der DE 42 00 422 A1 bekannt.

Aus der JP 01 273722 A ist eine Vorrichtung zum Festlegen eines verschiebbaren Beschattungssystems bekannt, wobei das Beschattungssystem mindestens eine Bremseinrichtung zum Festlegen des Beschattungssystems aufweist und die Bremseinrichtung mittels einer Stellstange, die durch ein Stellglied betätigbar ist, entgegen der Kraft einer Feder lösbar ist, wobei das Stellglied als Drehgriff gestaltet ist, wobei die Stellstange in Abstand von der Drehachse des Drehriffs am Drehgriff angreift.

Aufgabe der Erfindung ist es, eine Vorrichtung der eingangs genannten Art so weiterzubilden, dass sie baulich besonders einfach gestaltet und unkompliziert montierbar und betätigbar ist.

Gelöst wird die Aufgabe durch eine Vorrichtung, die gemäß den Merkmalen des Patentanspruchs 1 ausgebildet ist.

Bei der erfindungsgemäßen Vorrichtung ist das Stellglied als Drehgriff gestaltet. Die Bremseinrichtung wird somit durch eine Drehbewegung betätigt. Wird die Verbindung zwischen dem Drehgriff und der Bremseinrichtung ausschließlich mittels eines Seiles bewerkstelligt, können somit nur Zugkräfte vom Drehgriff auf die Bremseinrichtung übertragen werden, wirkt die Feder unmittelbar auf die Bremseinrichtung. Es ist aber genauso denkbar, ein starres Seil vorzusehen, das geeignet ist, Druckkräfte zu übertragen, zumindest über eine kurze Strecke, ohne dass eine Knickung des Seils erfolgt. Vorzugsweise bildet das Seil Bestandteil eines Bowdenzuges, dessen Bowdenzughülle sich an einem Gehäuse des Beschattungssystems abstützt. Auf diese Art und Weise können über größere Strecken auch Druckkräfte mittels des Seils vom Drehgriff auf die Bremseinrichtung übertragen werden. Dies ermöglicht es, die Feder an beliebiger Stelle anzuordnen, beispielsweise mittels der Feder unmittelbar auf den Drehgriff einzuwirken, der die Rückstellkraft der Feder über den Bowdenzug auf die Bremseinrichtung überträgt.

Vorzugsweise ist eine Feder vorgesehen, die unmittelbar am Drehgriff angreift. Sie dient in der Stellung des Drehgriffs, bei der das verschiebbare Beschattungssystem festgelegt ist, der vollständigen Zurückdrehung des Drehgriffs und in der Stellung, in der das Beschattungssystem nicht festgelegt ist zur Entlastung des Haltemoments des Drehgriffs beim Verschieben des Beschattungssystems. Diese Feder passiert vorzugsweise bei der Hälfte ihrer Drehung, insbesondere der Hälfte ihrer 90 ° Drehung einen Totpunkt, so dass sie in beiden Stellungen als Druckfeder wirkt. Das automatische Zurückdrehen des Drehgriffs erfolgt in diesem Fall durch die Federn zur Aufbringung der Bremskraft. Diese sind Bestandteil der Bremseinrichtung.

Von Bedeutung ist bei dem erfindungsgemäßen Stellglied ferner, dass das Seil in Abstand von der Drehachse des Drehgriffs am Drehgriff angreift. Das Seil ist demzufolge mit dem Drehgriff verbunden, demnach nicht, ohne Kraftschluss, am Stellglied vorbeigeführt. Da das Seil in Abstand von der Drehachse des Drehgriffs am Drehgriff angreift, somit ein Hebelarm zwischen Drehachse des Drehgriffs und Angriffspunkt des Seils am Drehgriff gegeben ist, kann eine definierte Betätigungskraft in das Seil zum Betätigen der Bremseinrichtung eingeleitet werden. Die Höhe der Kraft ist bezüglich der Federkraft abzustimmen.

Bevorzugt wird das verschiebbare Beschattungssystem im Bereich der beiden seitlichen Führungen festgelegt. Demzufolge ist gemäß einer bevorzugten Weiterbildung der Erfindung vorgesehen, dass zwei Bremseinrichtungen zum Festlegen des Beschattungssystems vorhanden sind, die auf einander abgewandten Seiten des Beschattungssystems angeordnet sind. Infolgedessen greifen die beiden Seile zum Betätigen der beiden Bremseinrichtungen an dem Drehgriff an. Sie werden somit gleichzeitig, beim Drehen des Drehgriffs beaufschlagt.

Der Drehgriff ist insbesondere so gestaltet, dass er, senkrecht zu seiner Drehachse, einen kreisförmigen Querschnitt aufweist und entlang des Bogens in einem den Drehgriff aufnehmenden Gehäuse des Beschattungssystems geführt ist. Demzufolge weist der Drehgriff keine körperliche Mittelachse auf, sondern ist am Umfang, wobei ein Bereich des Umfangs ausreicht, geführt.

Gemäß einer besonderen Ausführungsform der Erfindung kommt dem Kraftangriffspunkt des Seiles bzw. der Seile am Drehgriff eine besondere Bedeutung zu. So weist der Drehgriff vorzugsweise, der jeweiligen Bremseinrichtung zugeordnet, in Abstand und parallel zu dessen Drehachse einen Lagerzapfen zur Aufnahme des an der jeweiligen Bremseinrichtung angreifenden Seilzuges auf. Bei Verwendung zweier Seilzüge ist der Drehgriff zweckmäßig mit zwei diametral bezüglich der Drehachse des Drehgriffs angeordneten Lagerzapfen für die beiden Seile versehen. Als besonders vorteilhaft wird es angesehen, wenn der jeweilige Lagerzapfen für das Seil derart positioniert ist, dass sich beim Drehen des Drehgriffs zum Lösen der dem Seil zugeordneten Bremseinrichtung, der Hebel zwischen der Drehachse des Drehgriffs und dem Seil verringert.

Der Drehgriff ist vorzugsweise als Griffschale mit bezüglich der Griffschale erhöhter Griffleiste ausgebildet. Diese Gestaltung hat beim Handling wesentliche Vorteile, weil der Drehgriff im Bereich der Griffleiste nicht nur auf besonders einfache Art und Weise gedreht, sondern nach der Drehung auch das Beschattungssystem unmittelbar durch Beaufschlagen der Griffleiste mit einer Verschiebekraft senkrecht zur Längserstreckung der Griffleiste verschoben werden kann. Dem Drehgriff kommt somit eine Doppelfunktion zu, nämlich die der Vorrichtung zum Festlegen des Beschattungssystems als auch der Vorrichtung zum Verschieben des Beschattungssystems. In diesem Zusammenhang ist insbesondere vorgesehen, dass die Griffleiste, in einer ersten Endstellung bei festgelegtem Beschattungssystem, in Verschieberichtung des Beschattungssystems und/oder in einer zweiten Endstellung, bei nicht festgelegtem Beschattungssystem, quer zur Verschieberichtung des Beschattungssystems angeordnet ist.

Gemäß einer vorteilhaften Weiterbildung ist vorgesehen, dass Mittel zum Festlegen des Drehgriffs bezüglich einer Drehbewegung bei nicht festgelegtem Beschattungssystem vorgesehen sind. Diese Optimierung ist vor dem Hintergrund zu sehen, dass die Feder bzw. die Federn auf das Stellglied einwirken und es in die Stellung zurückführen wollen, die der festgelegten Bremseinrichtung bzw. den festgelegten Bremseinrichtungen entspricht. Durch die Mittel zum Festlegen des Drehgriffs bezüglich der Drehbewegung sind diese vom Bediener der Vorrichtung aufzunehmenden Drehmomente eliminiert, so dass er nur die Kraft zum Verschieben des Beschattungssystems aufbringen muss. Dies ist dann von besonderem Vorteil, wenn dem Drehgriff, wie zuletzt beschrieben, nicht nur die Funktion des Festlegens der Bremse, sondern auch des Verschiebens des Beschattungssystems zukommt. Die Mittel zum Festlegen des Drehgriffs bezüglich der Drehbewegung können unterschiedlich gestaltet sein. Sie wirken vorzugsweise durch Formschluss. Es ist aber auch denkbar, das gewünschte Ergebnis durch Reibschluss herbeizuführen, indem beispielsweise beim Beaufschlagen des Drehgriffs zum Verschieben des Beschattungssystems dieser mit einer erhöhten Normalkraft das Gehäuse kontaktiert.

Gemäß der Erfindung ist vorgesehen, dass der Drehgriff kreisförmigen Querschnitt aufweist und entlang eines elliptisch gestalteten Bogens im Gehäuse geführt ist. Hierbei ist die Verbindungslinie der Hauptscheitel der Ellipse quer zur Schieberichtung des Beschattungssystems angeordnet und die Länge der Verbindungslinie der Nebenscheitel der Ellipse geringfügig größer als der Durchmesser des Drehgriffs. Dies bedeutet, dass der vorzugsweise in den beiden, diametral angeordneten Seilen hängende Drehgriff zwischen den beiden Hauptscheiteln der Ellipse bewegt werden kann. Diese Bewegungsrichtungen entsprechen den Bewegungen des Beschattungssystems beim Verschieben in Öffnungs- und Schließrichtung. Dieser Freiheitsgrad des Drehgriffs bezüglich der Öffnung im Gehäuse kann dazu genutzt werden, die Festlegung des Drehgriffs bezüglich seiner Drehbewegung herbeizuführen. Dies erfolgt dadurch, dass die Griffleiste durch die Nebenscheitel der Ellipse verläuft und der Drehgriff im Bereich mindestens eines der Hauptscheitel ein Rastglied aufweist, zum formschlüssigen Eingriff in ein komplementäres Rastglied des Gehäuses. Konkret weist der Drehgriff im Bereich der Griffleiste eine Ausnehmung auf und die Ellipse im Bereich des diese Ausnehmung zugewandten Hauptscheitels eine Rastnase oder einen vorstehenden Bolzen. Wird das Beschattungssystem beispielsweise in Öffnungsrichtung verschoben, rastieren die vorgenannten Teile, so dass der Drehgriff festgelegt ist. Wird die Griffleiste losgelassen, überführen die Seile oder ggf. ein separates Federmittel den Drehgriff in seine symmetrische Lage bezüglich der Ellipse, somit auch bezüglich der Verbindungslinie zwischen den Nebenscheiteln der Ellipse, so dass die Rastierung aufgehoben wird und die Griffleiste unter der Einwirkung der Seilkräfte in die Stellung zurückschwenkt, in der die Bremseinrichtung das Beschattungssystem festlegt.

Der Erfindung schlägt somit eine Vorrichtung zum Festlegen eines verschiebbaren Beschattungssystems, insbesondere zur Verwendung in einem Kraftfahrzeug vor. Das Beschattungssystem kann stufenlos positioniert werden, weist aber eine Sicherung gegen unbeabsichtigte Bewegung, z. B. bei starkem Bremsen, auf. Das Lösen der Bremseinrichtung erfolgt ergonomisch und es wird die Bremseinrichtung beim Loslassen der Betätigung automatisch wieder aktiviert.

Bevorzugte Weiterbildungen der Erfindung ergeben sich aus den Unteransprüchen und der nachfolgenden Beschreibung.

Nachfolgend wird ein Ausführungsbeispiel der Erfindung, ohne hierauf beschränkt zu sein, unter Bezugnahme auf die Zeichnung näher erläutert. In der Zeichnung zeigt:
- Fig. 1: bei einem Kraftfahrzeug dessen Fahrzeughimmel mit Beschattungssystem, von unten gesehen,
- Fig. 2: den Bereich des in Fig. 1 gezeigten Beschattungssystems, der das Stellglied aufweist, wobei das als Drehgriff ausgebildete Stellglied in der Stellung dargestellt ist, bei der das verschiebbare Beschattungssystem festgelegt ist,
- Fig. 3: die in der Fig. 2 gezeigten Bauteile, allerdings in einer Stellung des Drehgriffs, der dem nicht festgelegten Beschattungssystem entspricht,
- Fig. 4: eine Ansicht des den Drehgriff aufnehmenden Gehäuseinneren in einer Stellung des Drehgriffs gemäß Fig. 2,

- Fig. 5: die in Fig. 4 gezeigten Bauteile, in einer Stellung des Drehgriffs entsprechend Fig. 3,
- Fig. 6: eine abgewandelte Gestaltung der Lagerung des Drehgriffs im Gehäuse, in der Funktionsstellung gemäß Fig. 2 und
- Fig. 7,: die in Fig. 6 gezeigte Anordnung, in einer Funktionsstellung gemäß Fig. 3.

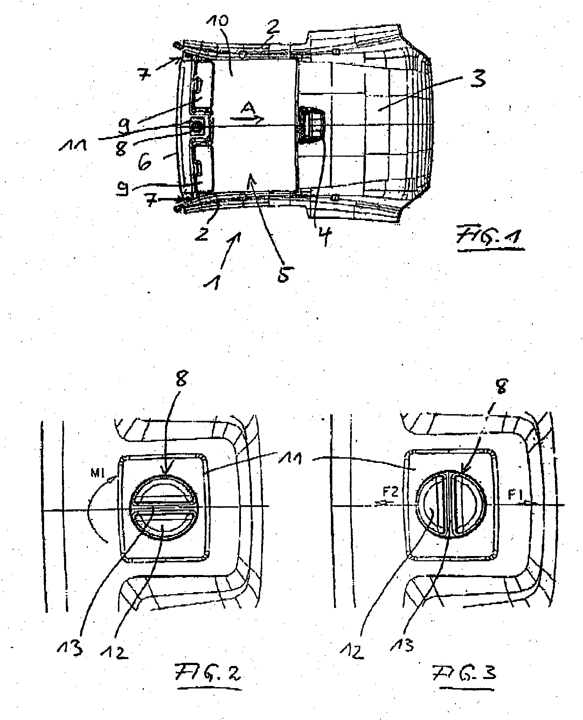

Fig. 1 zeigt den Dachhimmel 1 eines Kraftfahrzeuges, von der Unterseite somit vom Fahrzeuginnenraum gesehen. Bezogen auf die Orientierung des Zeichnungsblattes bezieht sich der in Fig. 1 links gezeigte Bereich des Dachhimmels 1 auf den vorderen Bereich des Fahrzeuges, der rechts gezeigte Bereich auf den hinteren Bereich des Fahrzeuges. Dieses Fahrzeug weist eine Panoramascheibe auf, die entsprechend der seitlichen Holme 2 des Fahrzeugs geformt ist und hinten etwa im Bereich der B-Säulen endet. Der anschließende, nicht durchsichtige Abschnitt 3 des Dachhimmels 1 ist vorne, in der Mitte, mit einer Leseleuchte 4 versehen. Vor der Leseleuchte, somit in dem sich an den Bereich 3 anschließenden Bereich, ist das Beschattungssystem 5 angeordnet. Dieses ist in seiner vorderen Stellung gezeichnet und in Richtung des Pfeiles A nach hinten verschieblich. Vorne weist das Beschattungssystem 5 einen Spriegel 6 auf, der teleskopierbar in den, entsprechend der Gestaltung des Fahrzeuges im Bereich der Holme 2, divergierend bzw. konvergierend angeordneten Holmen 2 endseitig gelagert ist. Im Bereich dieser Enden weist der Spriegel 6 Bremseinrichtungen 7 auf, die dem Festlegen des Spriegels 6 und damit des Beschattungssystems 5 relativ zu den Holmen 2 dienen. Im Spriegel 6 isL ferner, im Bereich der halben Länge des Spriegels, ein Stellglied 8 gelagert, das als Drehgriff ausgebildet ist. In noch näher zu beschreibender Art und Weise sind mit dem Drehgriff zwei Seile verbunden, die Bestandteil eines Bowdenzugs dienen und mittels derer die Bremseinrichtungen 7 betätigbar sind. Im Spriegel 6 sind ferner, in üblicher Art und Weise, klappbare Sonnenschutzblenden 9 gelagert. Nicht veranschaulicht ist in der Fig. 1 ein durch den Bereich 3 abgedeckter hinterer Spriegel, der gleichfalls stirnseitig in den Holmen 2 geführt ist. Eine starre Beschattungsbahn, die Bestandteil des Beschattungssystems 5 bildet, verbindet den vorderen Spriegel 6 und den hinteren Spriegel und wird demzufolge dann, wenn der vordere Spriegel 6 nach hinten geschoben wird in den Bereich zwischen dem Dachhimmelbereich 3 und der Außenhaut des Fahrzeuges eingeschoben.

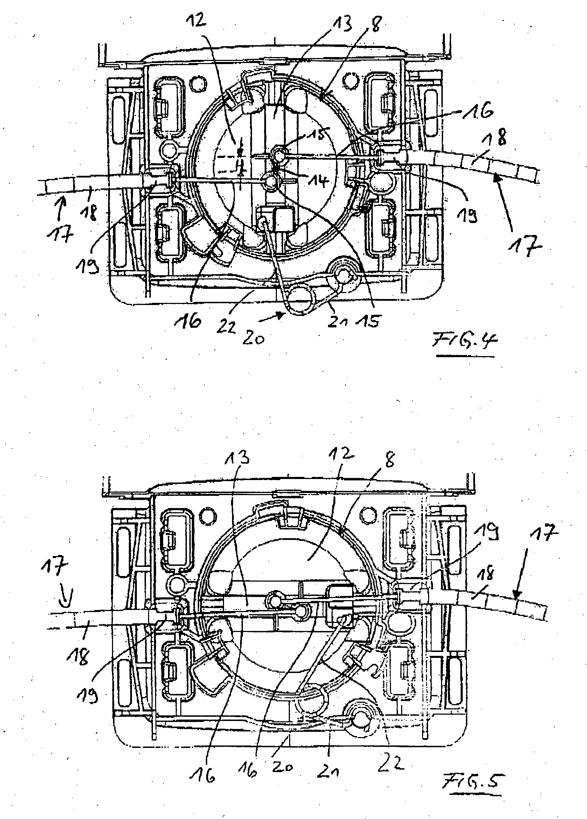

Die Fig. 2 bis 5 veranschaulichen die Anordnung des Stellgliedes 8 in einem Gehäuse 11, das im Spriegel 6 gelagert ist sowie die Ansteuerung des Stellglieds 8. Die Fig. 2 und 4 zeigen das Stellglied 8 bei wirksamer Bremseinrichtung 7, somit festgelegtem Beschattungssystem 5, die Fig. 3 und 5 diese Anordnung bei nicht festgelegter Bremseinrichtung 7 bzw. nicht festgelegtem Beschattungssystem 5.

Veranschaulicht sind die Figuren 2 und 3, dass der Drehgriff 8 als Griffschale 12 mit bezüglich der Griffschale 12 erhöhter Griffleiste 13 ausgebildet ist. Bei festgelegtem Beschattungssystem 5 ist die Griffleiste 13, bezogen auf deren Längsrichtung, in der Verschieberichtung A des Beschattungssystems 5 orientiert, bei nicht festgelegtem Beschattungssystem 5 hingegen bezüglich dieser Position um 90° gedreht, wie es jeweils in den Figuren 2 und 3 veranschaulicht ist. In der Figur 2 ist mit M1 und dem dazugehörigen Pfeil die Einleitung eines Drehmomentes in den Drehgriff veranschaulicht. In Figur 2 sind Kraftpfeile F1 und F2 verdeutlicht, die die Schieberichtung und Schiebekraft beim Verschieben des Beschattungssystems 5 verdeutlichen.

In der Figur 4 ist die geometrische Drehachse des Drehteils 8 mit der Bezugsziffer 14 bezeichnet. Der Drehgriff 8 weist, der jeweiligen Bremseinrichtung 7 zugeordnet, in Abstand und parallel zu dessen Drehachse 14 einen Lagerzapfen 15 zur Aufnahme des an der jeweiligen Bremseinrichtung 7 angreifenden Seils 16 auf. Das Seil 16 ist somit fest mit dem Lagerzapfen 15 verbunden. Es bildet Bestandteil eines Bowdenzuges 17, dessen Hülle 18 mittels eines gehäuseseitigen Klemmteils 19 fixiert ist, somit axial festgelegt ist. Das Seil 16 bildet die knicksteife Seele des Bowdenzugs 17. Im Gehäuse 11 ist eine Schenkelfeder 20 gelagert, deren einer Schenkel 21 im Gehäuse 11 positioniert ist, während der andere Schenkel 22 über einen mit dessen Ende verbundenen Ansatz in eine Ausnehmung des Drehgriffs 8 eingesteckt ist. Der Angriffspunkt der Schenkelfeder 20 am Drehteil 8 ist deutlich weiter von der geometrischen Drehachse 14 des Drehteils 8 entfernt, als die beiden Lagerzapfen 15. Der Darstellung der Figur 4 ist zu entnehmen, das die beiden Lagerzapfen 15 bei festgelegtem Beschattungssystem 5 auf einer Linie angeordnet sind, die in etwa mit der Längsachse der Griffleiste 13 zusammenfällt, wobei das jeweilige Seil 16 in etwa im rechten Winkel zur Längserstreckung der Griffleiste 13 positioniert ist. Dies hat, wie der Darstellung der Figuren 4 und 5 zu entnehmen ist, zur Folge, dass sich, beim Drehen des Drehgriffs 8 zum Lösen der den Seilen 16 zugeordneten Bremseinrichtung 7, der Hebel H zwischen der Drehachse 14 und dem Angriffspunkt des Seils 16 am Lagerzapfen 15 verringert. Die Feder 20 dient in der Stellung gemäß der Figuren 2 und 4 zur vollständigen Zurückdrehung des Drehgriffs 8 und in der Stellung gemäß der Figuren 3 und 5 zur Entlastung des Haltemoments des Drehgriffs beim Verschieben des Beschattungssystems 5. Die Feder 20 passiert bei der Hälfte der 90 Drehung einen Totpunkt, so dass sie in beiden Stellungen als Druckfeder wirkt. Das automatische Zurückdrehen des Drehgriffs 8 erfolgt durch die Federn zur Aufbringung der Bremskraft. Diese sind Bestandteil der Bremseinrichtung 7.

Bei der insoweit beschriebenen Ausführungsform weist der Drehgriff 8, senkrecht zur Drehachse 14, einen kreisförmigen Querschnitt auf und es besitzt das Gehäuse 14 eine entsprechend gestaltete Öffnung zur spielfreien Aufnahme des Drehgriffs 8. Der Drehgriff 8 ist demzufolge entlang eines Bogens geführt.

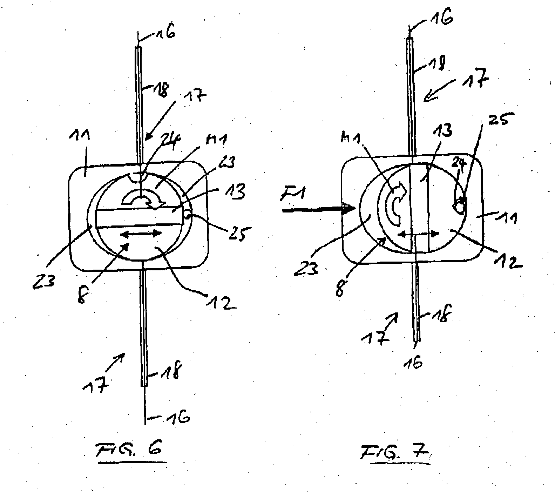

Eine Modifizierung gegenüber dieser beschriebenen Ausführungsform ist in den Figuren 6 und 7 veranschaulicht. Auch bei dieser beinhaltet der Betätigungsgriff, d. h. der Drehgriff zwei Funktionen, nämlich die Entriegelung der beiden Bremseinrichtungen 7 und die Griffschale 12 mit Griffleiste 13 zum Verschieben der gesamten Einheit.

Bei dieser Ausführungsform ist die Öffnung im Gehäuse als Ellipse ausgebildet, mit der größeren Erstreckung senkrecht zu den beiden Bowdenzügen 17. Dies bedeutet, dass der Drehgriff 8, an dem die beiden Seile 16 des Bowdenzuges 17 angreifen, in Richtung des Doppelpfeiles B in der elliptischen Öffnung 23 verschieblich sind.

Bei dieser Ausführungsform dienen die federbelasteten Seile 16 zum Übertragen der Kraft, die erforderlich ist, um die Bremseinrichtungen 7 in die Position zu überführen, die der nicht festgelegten Stellung des Beschattungssystems 5 entspricht. Die Seile 16 dienen dabei auch der Zentrierung des Drehgriffs 8 im Gehäuse 11. Der Drehgriff ist federbelastet. Die Überführung in die nicht festgelegte Stellung der Bremseinrichtungen erfolgt durch 90°-Drehung des Drehgriffs 8. Nach der 90°- Drehung kommt eine am Griff 8 angeformte Mulde 24 mit einem am Gehäuse 11 angespritzten feststehenden Bolzen 25 zur Überdeckung und wird mit diesem durch die wirkende Verschiebekraft F1 in Eingriff gebracht. Demzufolge stützt sich das wirkende Drehmoment des Drehgriffs 8 am Gehäuse 11 ab. Es muss nur noch die Verschiebekraft F1 zum Verschieben des Beschattungssystems 5 aufgebracht werden. Wird der Drehgriff 8 entlastet, d. h. es wirkt keine Verschiebekraft F1, zentriert sich der Drehgriff 8 selbsttätig. Die Mulde 24 und der Bolzen 25 sind außer Eingriff und das jetzt entgegen der Pfeilrichtung M1 wirkende Drehmoment dreht den Drehgriff 8 in die Position zurück, in der die Bremseinrichtungen 7 das Beschattungssystem 5 wieder festlegen.

Durch diese Funktionalität der Vorrichtung zum Festlegen des Beschattungssystems wird eine Doppelbelastung des Nutzers durch das wirkende Drehmoment der 90°-Drehung und das gleichzeitige Verschieben des Beschattungssystems verhindert. Somit ergeben sich günstige ergonomische Bedingungen.

### Bezugszeichenliste

- Dachhimmel: 1
- Holm: 2
- Bereich: 3
- Leseleuchte: 4
- Beschattungssystem: 5
- Spriegel: 6
- Bremseinrichtung: 7
- Stellglied/Drehgriff: 8
- Sonnenschutzblende: 9
- Beschattungsbahn: 10
- Gehäuse: 11
- Griffleiste: 13
- Drehachse: 14
- Lagerzapfen: 15
- Seil: 16
- Bowdenzug: 17
- Hülle: 18
- Klemmteil: 19
- Schenkelfeder: 20
- Schenkel: 21
- Schenkel: 22
- Öffnung: 23
- Mulde: 24
- Bolzen: 25

## Patentansprüche

1. Vorrichtung zum Festlegen eines verschiebbaren Beschattungssystems (5), insbesondere zur Verwendung in einem Kraftfahrzeug, wobei das Beschattungssystem (5) mindestens eine Bremseinrichtung (7) zum Festlegen des Beschattungssystems (5) aufweist und die Bremseinrichtung (7) mittels eines Seiles (16), das durch ein Stellglied (8) betätigbar ist, entgegen der Kraft einer Feder (20) lösbar ist, wobei das Stellglied als Drehgriff (8) gestaltet ist, wobei das Seil (16) in Abstand von der Drehachse (14) des Drehgriffs (8) am Drehgriff (8) angreift, wobei der kreisförmigen Querschnitt aufweisende Drehgriff (8) entlang eines elliptisch gestalteten Bogens im Gehäuse (11) geführt ist, wobei die Verbindungslinie der Hauptscheitel der Ellipse quer zur Schieberichtung des Beschattungssystems (5) angeordnet ist, und die Länge der Verbindungslinie der Nebenscheitel der Ellipse geringfügig größer ist, als der Durchmesser des Drehgriffs (8), wobei die Griffleiste (13), bei nicht festgelegtem Beschattungssystem (5), durch die Nebenscheitel der Ellipse verläuft und der Drehgriff (8) im Bereich mindestens eines der Hauptscheitel ein Rastglied (24) aufweist, zum formschlüssigen Eingriff in ein komplementäres Rastglied (25) des Gehäuses (11).

2. Vorrichtung nach Anspruch 1, **dadurch gekennzeichnet, dass** zwei Bremseinrichtungen (7) zum Festlegen des Beschattungssystems (5) vorgesehen sind, die auf einander abgewandten Seiten des Beschattungssystems (5) angeordnet sind, sowie die beiden Seile (16) zum Betätigen der beiden Bremseinrichtungen (7) an dem Drehgriff (8) angreifen.

3. Vorrichtung nach Anspruch 1 oder 2, **dadurch gekennzeichnet, dass** der Drehgriff (8), senkrecht zur Drehachse (14), einen kreisförmigen Querschnitt aufweist und entlang des Bogens eines den Drehgriff (8) aufnehmenden Gehäuses (11) des Beschattungssystems (5) geführt ist.

4. Vorrichtung nach einem der Ansprüche 1 bis 3, **dadurch gekennzeichnet, dass** das Seil (16) die Seele eines Bowdenzuges (17) bildet und dessen Bowdenzughülle (18) sich am Gehäuse (11) des Beschattungssystems (5) abstützt, oder in diesem gelagert ist.

5. Vorrichtung nach einem der Ansprüche 1 bis 4, **dadurch gekennzeichnet**, das der Drehgriff (8), der jeweiligen Bremseinrichtung (7) zugeordnet, in Abstand und parallel zu dessen Drehachse (14) einen Lagerzapfen (15) zur Aufnahme des an der jeweiligen Bremseinrichtung (7) angreifenden Seiles (16) aufweist.

6. Vorrichtung nach Anspruch 5, **dadurch gekennzeichnet**, das der Drehgriff (8) zwei diametral bezüglich der Drehachse (14) angeordnete Lagerzapfen (15) für zwei Seile (16) aufweist.

7. Vorrichtung nach Anspruch 5 oder 6, **dadurch gekennzeichnet**, das der jeweilige Lagerzapfen (15) für das Seil (16) derart positioniert ist, dass sich beim Drehen des Drehgriffs (8) zum Lösen der dem Seil (16) zugeordneten Bremseinrichtung (7) der Hebel (H) zwischen der Drehachse (14) des Drehgriffs (8) und dem Lagerzapfen (15) verringert.

8. Vorrichtung nach einem der Ansprüche 1 bis 7, **dadurch gekennzeichnet**, das der Drehgriff (8) als Griffschale (12) mit bezüglich der Griffschale (12) erhöhter Griffleiste (13) ausgebildet ist.

9. Vorrichtung nach Anspruch 8, **dadurch gekennzeichnet**, das die Griffleiste (13) in einer ersten Endstellung, bei festgelegtem Beschattungssystem (5), in Verschieberichtung des Beschattungssystems (5) und/oder in einer zweiten Endstellung, bei nicht festgelegtem Beschattungssystem (5), quer zur Verschieberrichtung des Beschattungssystems (5) angeordnet ist.

10. Vorrichtung nach einem der Ansprüche 1 bis 9, **dadurch gekennzeichnet, dass** Mittel (24, 25) zum Festlegen des Drehgriffs (8) bezüglich einer Drehbewegung bei nicht festgelegtem Beschattungssystem (5) vorgesehen sind.

## Claims

1. An apparatus for fixing a slidable shading system (5), especially for use in a motor vehicle, wherein the shading system (5) comprises at least one braking device (7) for fixing the shading system (5) and the braking device (7) can be released against the force of a spring (20) by means of a cable (16) which can be actuated by an actuator (8), wherein the actuator is arranged as a turning handle (8), wherein the cable (16) acts on the turning handle (8) at a distance from the axis of rotation (14) of the turning handle (8), wherein the turning handle (8) having a circular cross-section is guided along an elliptically arranged arc in the housing (11), wherein the connecting line of the main apex of the ellipse is arranged transversely to the sliding direction of the shading system (5), and the length of the connecting line of the secondary apex is slightly greater than the diameter of the turning handle (8), wherein the handle bar (13), when the shading system (5) is not fixed, extends through the secondary apex of the ellipse, and the turning handle (8) comprises a latching member (24) in the region of at least one of the main apexes for the interlocking engagement into a complementary latching member (25) of the housing.

2. An apparatus according to claim 1, **characterized in that** two braking devices (7) are provided for fixing the shading system (5), which are arranged on sides of the shading system (5) that face away from each other, and the two cables (16) for actuating the two braking devices (7) act on the turning handle (8).

3. An apparatus according to claim 1 or 2, **characterized in that** the turning handle (8), perpendicularly to the axis of rotation (14), has a circular cross-section and is guided along the arc of a housing (11) of the shading system (5), which housing (11) accommodates the turning handle (8).

4. An apparatus according to one of the claims 1 to 3, **characterized in that** the cable (16) forms the core of a Bowden pull wire (17), the Bowden pull wire cover (18) of which rests on the housing (11) of the shading system (5) or is mounted therein.

5. An apparatus according to one of the claims 1 to 4, **characterized in that** the turning handle (8), which is associated to the respective braking device (7), comprises a bearing pin (15) at a distance and parallel to its axis of rotation (14) for accommodating the cable (16) acting on the respective braking device (7).

6. An apparatus according to claim 5, **characterized in that** the turning handle (8) comprises two bearing pins (15) for two cables (16), said bearing pins (15) being arranged diametrically with respect to the axis of rotation (14).

7. An apparatus according to claim 5 or 6, **characterized in that** the respective bearing pin (15) for the cable (16) is positioned in such a way that the lever (H) between the axis of rotation (14) of the turning handle (8) and the bearing pin (15) decreases during the rotation of the turning handle (8) for releasing the braking device (7) associated with the cable (16).

8. An apparatus according to one of the claims 1 to 7, **characterized in that** the turning handle (8) is arranged as a handle shell (12) with a handle bar (13) which is raised with respect to the handle shell (12).

9. An apparatus according to claim 8, **characterized in that** the handle bar (13) is arranged in the sliding direction of the shading system (5) in a first end position when the shading system (5) is fixed, and/or is arranged transversely to the sliding direction of the shading system (5) in a second end position when the shading system (5) is not fixed.

10. An apparatus according to one of the claims 1 to 9, **characterized in that** the means (24, 25) are provided for fixing the turning handle (8) with respect to a rotary movement when the shading system (5) is not fixed.

## Revendications

1. Dispositif pour immobiliser un système d'ombrage (5) déplaçable, destiné en particulier à être utilisé dans un véhicule à moteur, dans lequel le système d'ombrage (5) comporte au moins un dispositif de frein (7) destiné à immobiliser le système d'ombrage (5) et le dispositif de frein (7) peut être défait, au moyen d'un câble (16) pouvant être manoeuvré par un organe d'actionnement (8), contre la force d'un ressort (20), dans lequel l'organe d'actionnement est conçu comme une poignée pivotante (8), dans lequel le câble (16) se met en prise sur la poignée pivotante (8) à distance de l'axe de rotation (14) de la poignée pivotante (8), dans lequel la poignée pivotante (8) présentant une section circulaire est guidée le long d'un arc de cercle elliptique dans le boîtier (11), dans lequel la ligne reliant les sommet principaux de l'ellipse est disposée perpendiculairement au sens de translation du système d'ombrage (5), et la longueur de la ligne reliant les sommets secondaires de l'ellipse est légèrement plus grande que le diamètre de la poignée pivotante (8), dans lequel la barrette de préhension (13) passe, quand le système d'ombrage (5) n'est pas immobilisé, par les sommets secondaires de l'ellipse et la poignée pivotante (8) présente un élément d'engagement (24) au niveau d'au moins un des sommets principaux, destiné à se mettre en prise en correspondance de forme dans un élément d'engagement complémentaire (25) du boîtier (11).

2. Dispositif selon la revendication 1, **caractérisé en ce que** sont prévus deux dispositifs de frein (7) pour immobiliser le système d'ombrage (5), qui sont disposés sur un côté opposé du système d'ombrage (5), les deux câbles (16) qui servent à actionner les deux dispositifs de frein (7) se mettant en prise sur la poignée pivotante (8).

3. Dispositif selon la revendication 1 ou 2, **caractérisé en ce que** la poignée pivotante (8) présente perpendiculairement à l'axe de rotation (14) une section circulaire et est guidée le long de l'arc de cercle d'un boîtier (11) du système d'ombrage (5) recevant la poignée pivotante (8).

4. Dispositif selon l'une des revendications 1 à 3, **caractérisé en ce que** le câble (16) forme l'âme d'un câble Bowden (17) dont l'enveloppe de câble Bowden (18) s'appuie sur le boîtier (11) du système d'ombrage (5) ou est supportée dans celui-ci.

5. Dispositif selon l'une des revendications 1 à 4, **caractérisé en ce que** la poignée pivotante (8) présente, associé à chaque dispositif de frein (7), à distance et parallèlement à son axe de rotation (14), un goujon de support (15) destiné à recevoir le câble (16) qui se met en prise sur le dispositif de frein (7) correspondant.

6. Dispositif selon la revendication 5, **caractérisé en ce que** la poignée pivotante (8) présente deux goujons de support (15) pour deux câbles (16) disposés diamétralement par rapport à l'axe de rotation (14).

7. Dispositif selon la revendication 5 ou 6, **caractérisé en ce que** chaque goujon de support (15) pour le câble (16) est positionné de telle façon que lorsque la poignée pivotante (8) est tournée pour desserrer le dispositif de frein (7) associé au câble (16), le bras de levier (H) entre l'axe de rotation (14) de la poignée pivotante (8) et le goujon de support (15) se réduit.

8. Dispositif selon l'une des revendications 1 à 7, **caractérisé en ce que** la poignée pivotante (8) est conçue comme une poignée en coque (12) avec une barrette de préhension (13) surélevée par rapport à la poignée en coque (12).

9. Dispositif selon la revendication 8, **caractérisé en ce que** la barrette de préhension (13) est disposée dans une première position finale, quand le système d'ombrage (5) est immobilisé, dans le sens de translation du système d'ombrage (5) et/ou dans une deuxième position finale, quand le système d'ombrage (5) n'est pas immobilisé, perpendiculairement au sens de translation du système d'ombrage (5).

10. Dispositif selon l'une des revendications 1 à 9, **caractérisé en ce que** des moyens (24, 25) sont prévus pour immobiliser la poignée pivotante (8) par rapport à un mouvement de rotation quand le système d'ombrage (5) n'est pas immobilisé.
